# EUROPEAN PATENT SPECIFICATION

(11) **EP 0 391 593 B1**
(45) Date of publication and mention of the grant of the patent: **30.11.1994**
(21) Application number: 90303296.9
(22) Date of filing: 28.03.1990
(51) Int. Cl.: B31F 1/00, B31F 5/04, B60R 13/02

(54) **Method of producing corrugated fiberboard article**
Verfahren zur Herstellung von Gegenständen aus Wellpappe
Procédé pour la fabrication de produits en carton ondulé

(30) Priority: 05.04.1989 JP 86665/89
(43) Date of publication of application: 10.10.1990
(73) Proprietor: HONSHU SEISHI KABUSHIKI KAISHA, Tokyo 104 (JP)
(72) Inventor: Sakurabashi, Ryoetsu, Utsunomiya-shi, Tochigi-ken (JP); Watanabe, Masahiro, Utsunomiya-shi, Tochigi-ken (JP)
(74) Representative: Marles, Alan David

(56) References cited:
- FR-A- 2 358 505
- GB-A- 2 047 612
- GB-A- 2 111 907
- US-A- 3 201 301
- US-A- 3 300 357
- PATENT ABSTRACTS OF JAPAN vol. 8, no. 16 (M-270)(1453) January 24, 1984; & JP-A-58 177742

## Description

The present invention relates to a method of producing a corrugated fiberboard article with a predetermined configuration by applying heat and pressure to a corrugated fiberboard blank in a die.

Articles formed from corrugated fiberboard are in great demand, particularly as lining materials for automobiles, for example, and method of effectively producing corrugated fiberboard articles has therefore been demanded.

Such articles are generally produced by employing a corrugated fiberboard blank comprising a corrugating medium and at least one linerboard, which are combined together with a fusible adhesive, and forming the blank into a desired shape by means of a die under heating. More specifically, the adhesive that is applied in between the corrugating medium and the linerboard softens upon heating, thereby allowing a relative displacement between the corrugating medium and the linerboard, and thus providing a change in the shape of the corrugated fiberboard blank. As the adhesive is cooled to effect solidification, the provided change in the shape of the corrugated fiberboard blank becomes permanent, and the forming process is thus completed.

The conventional forming method which is generally known from FR-A-2 358 505, US-A-3 300 357, JP-Abstracts 58-177742, or GB-A-2 111 907 suffers, however, from the following problems. Those portions of the linerboard which are on the inside of the drawn portions are likely to wrinkle. In some particular configurations of corrugated fiberboard articles, great tension is also generated in the linerboard portions on the inside of the drawn portions of the linerboard, so that the linerboard may tear at such portions. In order to overcome such disadvantages, a technique has already been developed in which the corrugating medium and the linerboard are temporarily tacked together to allow a relative displacement therebetween, thereby as far as possible preventing the linerboard from wrinkling or tearing [for example, see Japanese Patent Publication No. 56-30179 (1981)]. This technique is, however, incapable of completely preventing wrinkling, although it is capable of considerably reducing the extent to which the linerboard wrinkles. The conventional technique still involves the problem that the linerboard wrinkles to a substantial degree and may tear at deeply drawn portions or other portions greatly deformed from the original shape.

It is an object of the present invention to provide a method of producing a corrugated fiberboard article, which involves no danger of the linerboard wrinkling or tearing even if it has deformed substantially.

When a corrugated fiberboard article is used as a lining material, a skin sheet is additionally stuck on the linerboard. If large wrinkles develop in such a corrugated fiberboard article, the surface of the skin sheet reflects these wrinkles, resulting in a product having an unacceptable appearance. Application of a skin sheet has heretofore been carried out in such a manner that a skin sheet is placed on a completed corrugated fiberboard article and the assembly is formed again in a die under heating, thereby bonding the skin sheet to the linerboard of the corrugated fiberboard article. It will be a great convenience if the application of a skin sheet can be effected simultaneously with the formation of a corrugated fiberboard article and hence the number of manufacturing steps can be reduced. However, it has been virtually impossible with the prior art to carry out the application of a skin sheet and the formation of a corrugated fiberboard article simultaneously in the same step because, if an assembly of a linerboard and a skin sheet which is previously superposed thereon is employed in place of a linerboard alone, the skin sheet is wrinkled exactly along wrinkles developed in the linerboard. Accordingly, it is a conventional practice to adopt the so-called double-stroke process wherein a corrugated fiberboard article is formed by a first stroke in a die and then a skin sheet is placed on the formed article and stuck thereto by a second stroke.

More specifically, when a corrugated fiberboard article alone is to be formed, even if the blank is wrinkled to a certain extent, the wrinkled blank is substantially smoothed when pressed by forming pressure, and a skin sheet, which is independently placed on the blank thus formed, does not completely follow the surface configuration of the linerboard. Accordingly, it is possible with the double-stroke process to obtain a product having no wrinkles in the skin sheet even when using the conventional method of producing a corrugated fiberboard article. In contrast, the so-called single-stroke process, in which a blank that has a skin sheet previously superposed on a linerboard is formed into a final product by a single stroke, does not generally allow application of a high pressure to the skin sheet and therefore does not provide the advantageous effect that the wrinkled blank is smoothed by the forming pressure. Even if a skin sheet having pressure resistance is employed and hence formation can be effected with a pressure by which a wrinkled blank can be smoothed, the skin sheet completely follows wrinkles thus reduced in size and it is therefore impossible to remove the wrinkles entirely and to obtain a product having no wrinkles in the surface of the skin sheet.

It is a second object of the present invention to provide a method of producing a corrugated fiberboard article which is capable of forming a corrugated fiberboard article on which application of a skin sheet has been completed by the above-described single-stroke process.

To attain the first object, the present invention provides a method of producing a corrugated fiberboard article comprising the steps indicated in claim 1.

The above and other objects, features and advantages of the present invention will become more apparent from the following description of the preferred embodiments thereof, taken in conjunction with the accompanying drawings, in which like reference numerals denote like elements, and of which:
Fig. 1 is a perspective view of a corrugated fiber-board article formed by the production method according to the present invention, the corrugated fiberboard article not yet having a skin sheet stuck thereon;
Fig. 2 is a sectional view of constituent materials of the corrugated fiberboard article shown in Fig. 1;
Fig. 3 is a plan view of one linerboard shown in Fig. 2;
Fig. 4 is a plan view of an auxiliary sheet which is temporarily tacked to the linerboard shown in Fig. 3;
Fig. 5 is a sectional view of a blank formed by joining together the constituent materials shown in Fig. 2;
Fig. 6 is a sectional view of a slit portion of the corrugated fiberboard article shown in Fig. 1;
Fig. 7 is a plan view of a composite sheet comprising the auxiliary sheet shown in Fig. 4 and a skin sheet stuck thereto;
Fig. 8 is a sectional view corresponding to Fig. 5, which shows a blank formed by employing the composite sheet shown in Fig. 7 in place of the auxiliary sheet shown in Fig. 4; and
Fig. 9 is a perspective view of constituent materials of a corrugated fiberboard article in a manufacturing step of another embodiment of the production method according to the present invention.

The present invention will be described below in detail with reference to the accompanying drawings.

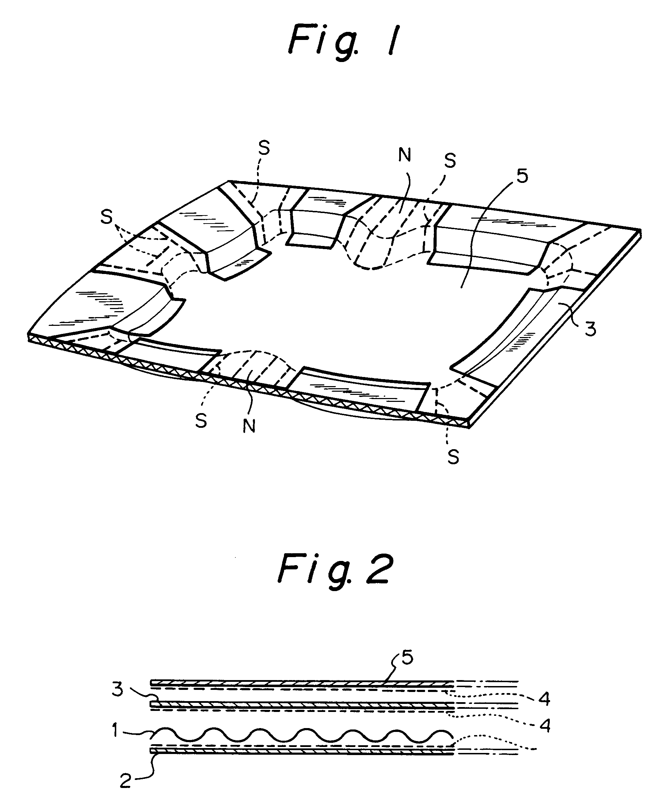

Fig. 1 shows one example of a corrugated fiberboard article not yet having a skin sheet provided thereon. In this example, the corrugated fiberboard article is used as a lining material for the ceiling of an automobile after a skin sheet has been stuck to the inner side of the article by a known method.

In Fig. 1, the outer periphery of an auxiliary sheet 5 is shown by the bold line, and slits S and notches N, which are formed in a linerboard 3 underneath the auxiliary sheet 5, are shown by the bold chain lines, for the sake of illustration.

Fig. 2 shows a first step of the process for producing the corrugated fiberboard article shown in Fig. 1. First of all, a combination of a corrugated medium 1 and a first linerboard 2, which are joined together by a fusible adhesive 4 (the combination being known as single-faced corrugated fiberboard), is prepared, together with a second linerboard 3 which has a fusible adhesive 4 on one side thereof and which is separate from the above-mentioned combination. There is no particular restriction on heat-fusible adhesives usable in the present invention. It is possible to employ any desired material, for example, thermoplastic synthetic resins such as polypropylene and polyethylene, hot-melt resins, etc. When a thermoplastic resin is employed, it may be coated on the linerboard 3 in advance or may be used in the form of a sheet which is independent of the linerboard 3. When it is used in the form of a sheet, the adhesive 4 may be locally tacked to the linerboard 3 by use of adhesive tape, for example, or may be employed as a member which is completely independent of the linerboard 3, as described later. That is, the adhesive 4 which is in sheet form may be held between the linerboard 3 and the single-faced corrugated fiberboard (comprising the corrugating medium 1 and the first linerboard 2) when the linerboard 3 is temporarily tacked to the corrugated fiberboard.

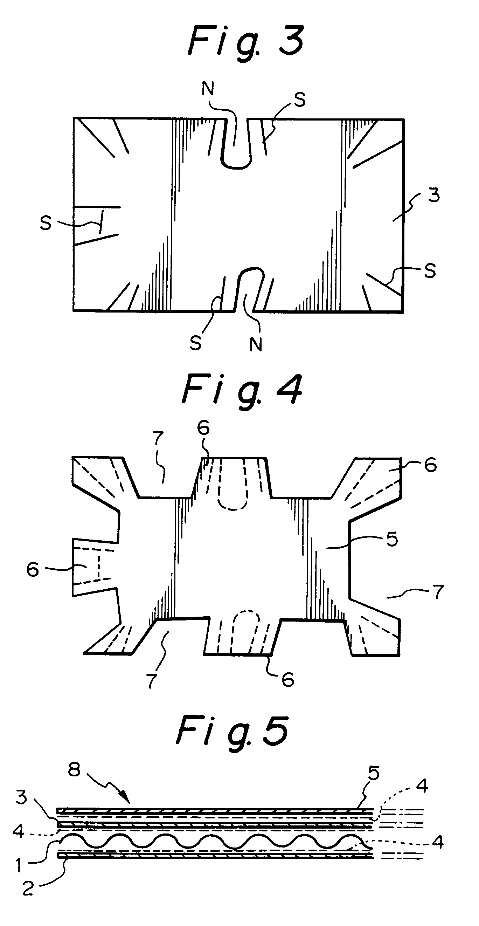

The second linerboard 3 has previously been formed with slits S and notches N, as shown in Fig. 3. The positions of the slits S and the notches N correspond to the respective positions in the corrugated fiberboard article shown in Fig. 1. In addition, an auxiliary sheet 5 having a fusible adhesive 4 is disposed adjacent to the linerboard 3, as shown in Fig. 2. The adhesive 4 provided on the auxiliary sheet 5 may also be attached to the sheet 5 in advance or may be prepared in the form of a sheet which is independent of the sheet 5. The expression "having an adhesive" that is herein used with regard to the linerboard 3 and the auxiliary sheet 5 means an arrangement wherein the adhesive layer is eventually disposed between the linerboard 3 or the auxiliary sheet 5 and a member which is bonded thereto. As shown in Fig. 4, the auxiliary sheet 5 has an integral structure comprising portions 6 which cover the slits S and the notches N, respectively, when it is superposed on the linerboard 3 shown in Fig. 3, and cut portions 7 each defined between each pair of adjacent covering portions 6. It should be noted that in Fig. 4 the chain lines indicate positions which face the slits S and notches N, respectively, when the auxiliary sheet 5 is superposed on the linerboard 3 shown in Fig. 3. It is preferable for each of the covering portions 6 to cover either one slit S or one notch N, but it is also possible to arrange the auxiliary sheet 5 such that one covering portion 6 covers a plurality of slits S or notches N in a case where the slits S and the notches N are provided in close proximity to each other.

In the illustrated example, the auxiliary sheet 5 is made of the same paper as the linerboard 3. However, the constituent material of the auxiliary sheet 5 is not necessarily limitative to the same paper as the linerboard 3. It is possible to employ any desired formable material as long as the material employed is sufficiently thick to cover and smooth steps which are formed from the cut edges of the slits S when the auxiliary sheet 5 is superposed on the linerboard 3 and yet sufficiently thin so that the steps defined between the covering portions 6 and the cut portions 7 will not affect the surface of the skin sheet provided over the auxiliary sheet 5.

The constituent materials shown in Fig. 2 are joined together, as shown in Fig. 5, and temporarily tacked in this state. The materials may be tacked in such a manner that the auxiliary sheet 5 is tacked to the linerboard 3 in advance and this combination is tacked to the single-faced corrugated fiberboard (comprising the corrugating medium 1 and the first linerboard 2), or the linerboard 3 and the auxiliary sheet 5, which are independent of each other, are simultaneously tacked to the single-faced corrugated fiberboard. The tacking may be effected by either applying adhesive tape to the peripheral portions of the assembly, or by heating peripheral portions which are to be cut off at the time of trimming, thereby locally melting the adhesive 4 to effect local bonding. The assembly of the constituent materials thus tacked together is employed as a blank 8 which is subjected to the forming process.

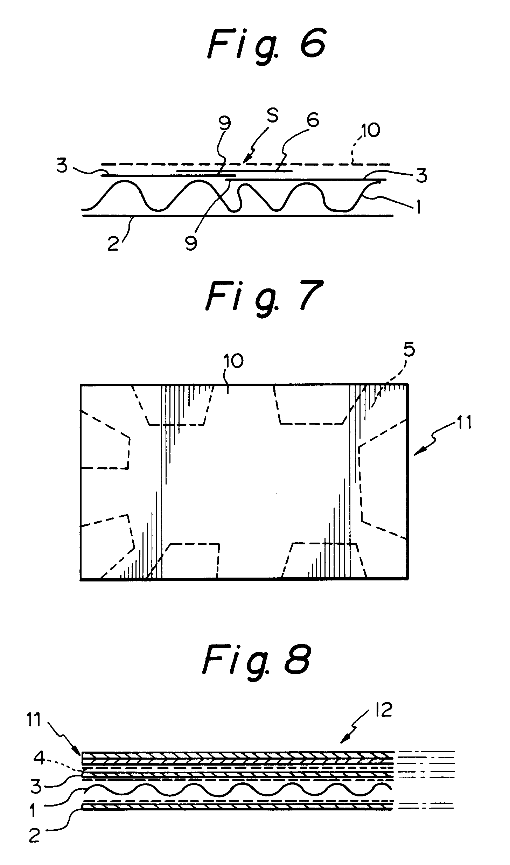

The blank 8 prepared in this way is pressed under heating in between a fixed die which is in contact with the first linerboard 2 and a movable die which is in contact with the auxiliary sheet 5, in the conventional way. In the initial stage of this forming process, the linerboard 3 can be displaced relative to the corrugating medium 1 and it is therefore possible to easily change the shape of the blank 8. In addition, since portions of the linerboard 3 which are subjected to a large contractile force are provided with the slits S, when the blank 8 is formed, the cut edges of each slit S overlap each other, as shown in Fig. 6, and there is therefore no fear of the linerboard 3 being wrinkled at these portions. Portions of the linerboard 3 which are subjected to a high degree tension are previously provided with the notches N, and there is therefore no danger of the linerboard 3 being torn. It should be noted that the notches N may be replaced with slits because, when the linerboard 3 is subjected to tension, the slits can open to prevent the linerboard 3 from tearing. However, it can be seen that the notches N are preferable to slits when considering the possibility that a crack may develop from the end of a slit.

The auxiliary sheet 5 is also only locally tacked and therefore can be displaced relative to the linerboard 3 in the initial stage of the forming process. There is therefore no danger of the auxiliary sheet 5 having an adverse effect on the forming of the product nor any risk that the covering portions 6 of the auxiliary sheet 5 will adversely affect the overlap of the cut edges of the slits S. Contraction of the auxiliary sheet 5 itself that takes place during the forming process is absorbed by the cut portions 7 and there is therefore no possibility that the auxiliary sheet 5 will wrinkle. Next, the adhesives 4 melt on heating to fusion-bond together the constituent materials in the form shown in Fig. 1. After cooling, the adhesives 4 solidify to maintain the bonded materials in the illustrated form. In this state, the overlap of the cut edges of each slit S is covered with the corresponding portion 6 of the auxiliary sheet 5, so that no step is formed. The portions where the corrugating medium 1 are exposed through the notches N are similarly covered with the corresponding portions 6 and no corrugation of the corrugating medium 1 is therefore discernible from the outside.

When the corrugated fiberboard article is used as a lining material for an automobile, for example, a skin sheet 10 (see Fig. 6) is additionally stuck to the surface of the auxiliary sheet 5 by a known means. Examples of a skin sheet usable in the present invention are a plastic sheet, nonwoven synthetic fiber, plastic foam and a laminate of these materials. It is also possible to use a nonwoven fabric of natural fibers mixed with synthetic fibers, for example, as a bonding means. Even in a case where the corrugated fiberboard article is finally pasted with a skin sheet and hence the linerboard 3 does not appear at the surface of the resulting product, if the covering portions 6 of the auxiliary sheet 5 are not provided, the cut edges 9 of a slit portion S, which are not supported by the corrugating medium 1 as shown in Fig. 6, are inwardly bent, resulting in a recess in the surface of the skin sheet 10. Thus, the covering portions 6 of the auxiliary sheet 5 are also effective in preventing such deformation of the skin sheet 10.

In the present invention, a combination of an auxiliary sheet and a skin sheet may be used in place of the auxiliary sheet 5. Fig. 7 shows a composite sheet 11 comprising an auxiliary sheet 5 and a skin sheet 10 bonded thereto by means of an adhesive. The composite sheet 11 is temporarily tacked to the second linerboard 3 to form a blank 12, as shown in Fig. 8. This blank 12 is pressed by a single stroke in a die, thereby obtaining a product with a configuration shown in Fig. 1 and having a skin sheet already provided thereon. In this case, the adhesive 4 that is applied in between the composite sheet 11 and the second linerboard 3 extends over not only the auxiliary sheet 5, but also the area including the skin sheet 10 at a position corresponding to each cut portion 7 of the auxiliary sheet 5.

The composite sheet 11 shown in Fig. 7 may comprise the auxiliary sheet 5 and the skin sheet 10, which are temporarily tacked together with an adhesive being interposed therebetween. In such a case, the skin sheet 10 can be displaced relative to the auxiliary sheet 5 during the forming process consequently further reducing the possibility that the skin sheet 10 may wrinkle.

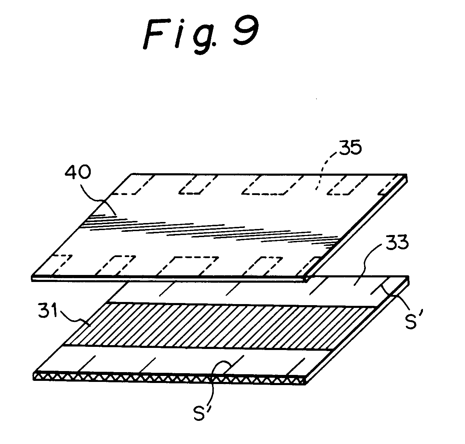

Fig. 9 shows another embodiment of the present invention, in which a region of the second linerboard 33 where no slits S′ are present is removed in advance. Even with such an arrangement, no corrugation of the corrugating medium 31 is discernible from the outside of the skin sheet 40 since the auxiliary sheet 35 (present underneath the skin sheet 40, indicated by the chain lines) is capable of completely covering the removed portion of the linerboard 33. The other manufacturing steps are the same as those in the first-described embodiment.

According to the production method of the present invention, it is possible to substantially completely prevent the linerboard from wrinkling by means of slits that are provided therein, and the step that is made by the overlap of the cut edges of each slit is covered with the corresponding covering portion of the auxiliary sheet. Accordingly, a corrugated fiberboard article produced by this method has no wrinkle in the surface thereof when a skin sheet is stuck thereto afterward. In addition, there is no fear of the linerboard being torn in an uncontrollable pattern at a portion thereof which is subjected to a high degree of tension. This fact similarly applies in the case where a corrugated fiberboard article has a substantial degree of deformation. Accordingly, it is possible to obtain corrugated fiberboard articles having no undesired irregular configurations, for example, wrinkles, even if a high degree of deformation is caused by drawing or other similar processing. If a composite sheet which has a skin sheet attached to the side of the auxiliary sheet which is remote from the side that faces the linerboard is employed in place of the auxiliary sheet alone, it is possible to obtain a product with a skin sheet by a single stroke without it being accompanied by development of wrinkles.

## Claims

1. A method of producing a corrugated fiberboard article comprising the steps of:
forming slits and/or notches in at least one linerboard (3) of a corrugated fiberboard at predetermined positions before said linerboard (3) is bonded to the rest of the corrugated fiberboard (1);
temporarily tacking the linerboard (3) to said rest of the corrugated fiberboard with a fusible adhesive (4) interposed therebetween;
temporarily tacking an auxiliary sheet (5) to said linerboard (3) with a fusible adhesive (4) interposed therebetween to form a corrugated fiberboard blank, said auxiliary sheet (5) having an integral structure including covering portions (6) which cover said slits or notches and also having void portions (7) each defined between adjacent covering portions (6); and
shaping said corrugated fiberboard blank by pressing with a forming die under heating.

2. A method according to claim 1 wherein at least one of said fusible adhesive (4) between said linerboard (3) and said rest of the corrugated fiberboard and said fusible adhesive (4) between said auxiliary sheet (5) and said linerboard (3) is a thermoplastic resin which takes the form of a sheet.

3. A method according to claim 2 wherein said sheet of thermoplastic resin is held between the two associated members when these members are tacked to each other.

4. A method according to claim 2 wherein said sheet of thermoplastic resin is tacked to one of the two associated members.

5. A method according to claim 1 wherein said auxiliary sheet (5) is provided with a skin sheet (10) which is attached to the surface of said auxiliary sheet (5) remote from said linerboard (3).

6. A method according to claim 5 wherein said skin sheet (10) is bonded to the auxiliary sheet (5) before the step of temporarily tacking the auxiliary sheet to said linerboard (3).

7. A method according to claim 5 wherein said skin sheet (10) is temporarily tacked to the auxiliary sheet (5) with a fusible adhesive interposed therebetween before the step of temporarily tacking the auxiliary sheet to said linerboard.

8. A method according to claim 1 wherein said steps for temporarily tacking the liner board (3) to said rest of the corrugated fibreboard and temporarily tacking said auxiliary sheet (5) to said liner board (3) are achieved by using adhesive tapes.

9. A method according to claim 1 wherein said steps for temporarily tacking the liner board (3) to said rest of the corrugated fibreboard and temporarily tacking said auxiliary sheet (5) to said liner board (3) are achieved by locally fusing said fusible adhesives (4).

## Patentansprüche

1. Herstellungsverfahren für einen gewellten Faserelementgegenstand, wobei das Verfahren die folgenden Schritte aufweist:
Formen von Schlitzen und/oder Kerben in mindestens einer Einsatzplatte oder einem Tragelement (3) einem gewellten Faserelement an vorbestimmten Positionen und zwar bevor das Tragelement (3) mit dem Rest des gewellten Faserelements (1) verbunden wird;
vorübergehendes Befestigen oder Anheften des Tragelements (3) an dem Rest des gewellten Faserelements und zwar mit einem schmelzbaren Haftmittel oder Kleber (4) dazwischen angeordnet;
vorübergehendes Anheften eines Hilfsflächenelements (5) an dem Tragelement (3) mit einem schmelzbaren Haftmittel (4), das dazwischen angeordnet ist um einen gewellten Faserelementrohling zu bilden, wobei das Hilfsflächenelement (5) eine integrale Struktur besitzt, die folgendes aufweist:
Abdeckteile (6), die die Schlitze oder Kerben abdecken und Freiteile (7), die zwischen benachbarten Abdeckteilen (6) definiert sind; und
Formen des gewellten Faserelementrohlings durch Drücken oder Pressen mit einer formgebenden Form und zwar unter Wärmeeinwirkung.

2. Verfahren nach Anspruch 1, wobei mindestens eines der schmelzbaren Haftmittel (4), nämlich das schmelzbare Haftmittel (4) zwischen dem Tragelement (3) und dem Rest des gewellten Faserelements oder das schmelzbare Haftmittel (4) zwischen dem Hilfsflächenelement (5) und dem Tragelement (3) ein thermoplastisches Harz ist, das die Form eines Flächenelements einnimmt.

3. Verfahren nach Anspruch 2, wobei das Flächenelement aus thermoplastischem Harz zwischen den zwei assoziierten Gliedern gehalten wird, wenn diese Glieder aneinander befestigt oder geheftet werden.

4. Verfahren nach Anspruch 2, wobei das Flächenelement aus thermoplastischem Harz an eines der zwei assoziierten Glieder geheftet ist.

5. Verfahren nach Anspruch 1, wobei das Hilfsflächenelement (5) mit einem Haut- oder Außenflächenelement (10) versehen ist, das an der Oberfläche des Hilfsflächenelements (5) entfernt von dem Tragelement (3) befestigt ist.

6. Verfahren nach Anspruch 5, wobei das Hautflächenelement (10) mit dem Hilfsflächenelement (5) verbunden ist und zwar vor dem Schritt des vorübergehenden Anheftens des Hilfsflächenelements an dem Tragelement (3).

7. Verfahren nach Anspruch 5, wobei das Hautflächenelement (10) vorübergehend an dem Hilfsflächenelement (5) befestigt oder angeheftet ist und zwar mit einem schmelzbaren Haftmittel, das dazwischen angeordnet ist und zwar vor dem Schritt des vorübergehenden Anheftens des Hilfsflächenelements an dem Tragelement.

8. Verfahren nach Anspruch 1, wobei die Schritte des vorübergehenden Anheftens des Tragelements (3) an dem Rest des gewellten Faserelements und das vorübergehende Anheften des Hilfsflächenelements (5) an dem Tragelement (3) durch Haftstreifen oder -bänder erreicht werden.

9. Verfahren nach Anspruch 1, wobei die Schritte zum vorübergehenden Anheften des Tragelements (3) an dem Rest des gewellten Faserelements und das vorübergehende Anheften des Hilsflächenelements (5) an dem Tragelement (3) erreicht werden durch lokales Verschmelzen der schmelzbaren Haftmittel (4).

## Revendications

1. Procédé de fabrication d'un article de carton ondulé comprenant les stades suivants:
on forme des incisions et/ou des encoches dans au moins un carton de revêtement (3) d'un carton ondulé en enplacements prédéterminés avant que ledit carton de revêtement (3) ne soit lié au reste du carton ondulé (1),
on colle momentanément le carton de revêtement (3) audit reste du carton ondulé par un adhésif fusible (4) intercalé entre eux,
on colle momentanément une feuille auxiliaire (5) audit carton revêtement (3) par un adhésif fusible (4) intercalé entre eux pour former un flan de carton ondulé, ladite feuille auxiliaire (5) ayant une structure d'une seule pièce comprenant des parties de recouvrement (6) qui recouvrent lesdites incisions ou lesdites encoches et comportant également des parties vides (7) qui sont toutes définies entre des parties de recouvrement voisines (6), et
on moule ledit flan de carton ondulé en le pressant dans un moule de façonnage par application de chaleur.

2. Procédé selon la revendication 1, dans lequel au moins l'un desdits adhésifs, c'est-à-dire ledit adhésif fusible (4) compris entre ledit carton de revêtement (3) et ledit reste du carton ondulé et ledit adhésif fusible (4) compris entre ladite feuille auxiliaire (5) et ledit carton de revêtement (3) est une résine thermoplastique sous la forme d'une feuille.

3. Procédé selon la revendication 2, dans lequel ladite feuille de résine thermoplastique est maintenue entre les deux éléments associés lorsque ces éléments sont collés l'un à l'autre.

4. Procédé selon la revendication 2, dans lequel ladite feuille de résine thermoplastique est collée à l'un des deux éléments associés.

5. Procédé selon la revendication 1, dans lequel ladite feuille auxiliaire (5) est pourvue d'une feuille superficielle (10) qui est fixée à la surface de ladite feuille auxiliaire (5) opposée audit carton de revêtement (3).

6. Procédé selon la revendication 5, dans lequel ladite feuille superficielle (10) est liée à la feuille auxiliaire (5) avant le stade de collage momentané de la feuille auxiliaire audit carton de revêtement (3).

7. Procédé selon la revendication 5, dans lequel ladite feuille superficielle (10) est momentanément collée à la feuille auxiliaire (5) a l'aide d'un adhésif fusible intercalé entre elles avant le stade de collage momentané de la feuille auxiliaire audit carton de revêtement.

8. Procédé selon la revendication 1, dans lequel lesdits stades destinés à coller momentanément le carton de revêtement (3) audit reste du carton ondulé et à coller momentanément ladite feuille auxiliaire (5) audit carton de revêtement (3) sont réalisés en utilisant des rubans adhésifs.

9. Procédé selon la revendication 1, dans lequel lesdits stades destinés à coller momentanément le carton de revêtement (3) audit reste du carton ondulé et à coller momentanément ladite feuille auxiliaire (5) audit carton de revêtement (3) sont réalisés en faisant fondre localement lesdits adhésifs fusibles (4).
